# EUROPEAN PATENT SPECIFICATION

(11) **EP 2 661 014 B1**
(45) Date of publication and mention of the grant of the patent: **20.07.2016**
(21) Application number: 11852376.0
(22) Date of filing: 24.08.2011
(51) Int. Cl.: H04L 12/24, H04L 12/26, H04L 29/08

(54) **POLLING SUB-SYSTEM AND POLLING METHOD FOR COMMUNICATION NETWORK SYSTEM AND COMMUNICATION APPARATUS**
ABFRAGESUBSYSTEM UND ABFRAGEVERFAHREN IN EINEM KOMMUNIKATIONSNETZSYSTEM UND KOMMUNIKATIONSVORRICHTUNG
SOUS-SYSTÈME D'INTERROGATION ET PROCÉDÉ D'INTERROGATION POUR UN SYSTÈME DE RÉSEAU DE COMMUNICATION ET APPAREIL DE COMMUNICATION

(30) Priority: 28.12.2010 CN 201010609252
(43) Date of publication of application: 06.11.2013
(73) Proprietor: ZTE Corporation, Shenzhen, Guangdong 518057 (CN)
(72) Inventor: KONG, Peng, Shenzhen Guangdong 518057 (CN)
(74) Representative: Gervasi, Gemma
(86) International application number: PCT/CN2011/078844
(87) International publication number: WO 2012/088905

(56) References cited:
- CN-A- 1 725 699
- CN-A- 1 852 175
- CN-A- 1 859 160
- CN-A- 101 895 439
- US-A1- 2004 122 937
- US-B1- 6 973 491

## Description

### Technical Field

The present document relates to the field of communication technology, and more specifically, to a communication network system and a polling sub-system and a polling method for a communication apparatus.

### Background of the Related Art

With the development of communication technology and the construction of communication network, various communication apparatuses increasingly run in machine rooms of the office of telecom operators, most of these communication apparatuses are based on operating systems such as Windows, UNIX and Linux and run communication service programs on the operating systems. In order to guarantee the reliable running of the communication apparatuses, maintainers of the operators and equipment manufacturers are required to periodically or aperiodically perform polling work on the communication apparatuses of each office.

A normal polling method is: a polling personnel logging in each apparatus, according to polling handbooks corresponding to various kinds of apparatuses, performing manual operation step by step, collecting results and making a polling report. In such a polling mode, there exist too many manual interventions and a comparatively high misoperation probability, which occupies a large amount of maintenance manpower resources and also makes polling efficiency extremely low.

In order to enhance the reliability, usability and serviceability of polling process, it is urgently required to develop a simple and reliable polling technology or method, which makes tasks, such as routine polling, project completion polling, major festivals and holidays polling and polling before and after upgrade, more simple, comprehensive and accurate; can be compatible with different types of apparatuses and be convenient for extending; and can complete automatic polling and periodical polling and provide clear, accurate and diversified polling reports for users.

The document, "US 6,973,491 B1", discloses a system and method for monitoring the configuration states of target devices on a network.

The document, "US 2004/0122937 A1", discloses a system and method for tracking message flows throughout a distributed network using mobile surveillance agents (MSAs). The system comprises a repository of mobile surveillance agents (MSAs).

### Summary of the Invention

The technical problem required to be solved by the present document is to provide a polling sub-system and polling method for a communication network system and a communication apparatus, to implement automatic polling on the communication apparatus, reduce manual intervention, improve polling efficiency and enhance polling reliability.

In order to solve the above problem, the present document provides a communication network system, which comprises: a polling sub-system, a file server, and one or more communication apparatuses, wherein, the polling sub-system is configured to:
upload a polling script packet to the file server, acquire information of a polled apparatus, and remotely log in the polled apparatus according to the information of the polled apparatus; log in the file server from the polled apparatus, and acquire a corresponding polling script packet to deliver to the polled apparatus;
execute a polling script in the polling script packet on the polled apparatus, acquire output results of executing the polling script, and upload fles required to be returned to the file server from the polled apparatus; and
retrieve, from the file server, the files uploaded by the polled apparatus to the file server, integrate the output results of executing the polling script and the files returned by the polled apparatus to the file server, and output a polling report.

The information of the polled apparatus comprises but is not limited to one of the following information or any combination thereof:
an Internet Protocol (IP) address of the polled apparatus, a login username and password, a database username and password, and a login way.

The file server is a File Transfer Protocol (FTP) server, or a File Transfer Access and Management (FTAM) server, or a server implementing a function of uploading and downloading files; the communication apparatus refers to an apparatus which is based on operating systems such as Windows, UNIX or Linux and runs communication service programs on the operating systems.

The polling sub-system logs in the polled apparatus by a way of Secure Shell (SSH)/Telnet, and in a shell environment or a command (cmd) environment, executes the polling script packet, logs in the file server, and acquires the required polling script packet and uploads the files required to be returned to the file server.

The polling script packet comprises one or more polling items and is configured with a login user, a password and parameter information.

The polling sub-system manages the polled apparatus according to layers such as a polling script packet layer, and/or an apparatus layer, and/or an apparatus type layer, and/or an office layer, and/or a task layer, acquires a polling script packet of a corresponding layer and generates a polling report of the corresponding layer.

The present document further provides a polling sub-system used for polling communication apparatuses, which comprises: a polling script packet module, a polling configuration management module, a file transfer protocol module, a remote control protocol module, a polling report output module and an overall logic scheduling module, wherein:
the polling script packet module is configured to: save a polling script packet;
the polling configuration management module is configured to: save configured information of a polled apparatus;
the file transfer protocol module is configured to: implement an interlinkage between the polling sub-system and a file server, upload the polling script packet to the file server, and acquire, from the file server, files uploaded by the polled apparatus;
the remote control protocol module is configured to: implement an interlinkage between the polling sub-system and the polled apparatus, log in the polled apparatus according to the information of the polled apparatus, execute a polling script, and receive returned polling result information;
the polling report output module is configured to: integrate returned results of the remote control protocol module and the files acquired by the file transfer protocol module from the file server in a polling process, and output a polling report; and
the overall logic scheduling module is configured to: implement communication and scheduling among the polling script packet module, the polling configuration management module, the file transfer protocol module, the remote control protocol module and the polling report output module, and coordinate each module to perform the following processing:
   acquiring the information of the polled apparatus and the corresponding polling script packet, and uploading the information of the polled apparatus and the corresponding polling script packet to the file server through the file transfer protocol module; logging in the polled apparatus through the remote control protocol module, and after downloading polling script packet from the file server and executing the polling script packet, receiving the returned polling results, and uploading polling files to the file server; controlling the polling report output module, integrating the returned results of the remote control protocol module and the files acquired by the file transfer protocol module from the file server, and outputting the polling report.

The information of the polled apparatus comprises but is not limited to one of the following information or any combination thereof: an Internet Protocol (IP) address of the polled apparatus, a login username and password, a database username and password, and a login way.

The polling sub-system further comprises: a log module, a periodical task drive module and an interface display interaction module;
the interface display interaction module is configured to: show a polling interface, display a polled apparatus which has been added, display polling script packets configured under the apparatus, display an IP address of the apparatus, display an apparatus type of the apparatus, and display an office to which the apparatus belongs; and/or display polling control and process information of one polling script packet, one apparatus, one apparatus type, one office or all apparatuses; and/or configure an address of the file server; and/or display a generated polling report after the polling is finished;
the log module is configured to: implement user outputs and manage polling logs; and the periodical task drive module is configured to: implement a periodical polling function, save a polling task and trigger the polling task.

The polling script packet comprises: polling script files, the polling script files comprise but are not limited to one of the following information or any combination thereof: a polling script, a purpose of each script, a polling method, an inspection standard, a processing suggestion and script parameter information.

The polling script packet module is configured to: save a polling script packet of a corresponding layer according to layers such as a polling script packet layer, and/or an apparatus layer, and/or an apparatus type layer, and/or an office layer, and/or a task layer;
the overall logic scheduling module is configured to: call the polling script packet layer required in executing the polling according to layers such as a polling script packet layer, and/or an apparatus layer, and/or an apparatus type layer, and/or an office layer, and/or a task layer; and
the polling report output module is configured to: generate a polling report of a corresponding layer according to layers such as a polling script packet layer, and/or an apparatus layer, and/or an apparatus type layer, and/or an office layer, and/or a task layer.

The present document further provides a polling method for a communication apparatus, which comprises: in a communication system comprising a polling sub-system, a file server and one or more communication apparatuses,
the polling sub-system uploading a polling script packet to the file server, acquiring information of a polled apparatus, and remotely logging in the polled apparatus according to the information of the polled apparatus;
the polling sub-system logging in the file server from the polled apparatus, and acquiring a corresponding polling script packet to deliver to the polled apparatus;
the polling sub-system executing a polling script in the polling script packet on the polled apparatus, acquiring output results of executing the polling script, and uploading files required to be returned to the file server from the polled apparatus; and
the polling sub-system retrieving, from the file server, the files uploaded by the polled apparatus to the file server, integrating the output results of executing the polling script and the files returned by the polled apparatus to the file server, and outputting a polling report.

The information of the polled apparatus comprises but is not limited to one of the following information or any combination thereof: an Internet Protocol (IP) address of the polled apparatus, a login username and password, a database username and password, and a login way.

The file server is a File Transfer Protocol (FTP) server, or a File Transfer Access and Management (FTAM) server, or a server implementing a function of uploading and downloading files; the communication apparatus refers to an apparatus which is based on operating systems such as Windows, UNIX or Linux and runs communication service programs on the operating systems.

The polling sub-system logs in the polled apparatus by a way of Secure Shell (SSH)/Telnet, and in a shell environment or a command (cmd) environment, executes the polling script packet, logs in the file server, and acquires required polling script packet and uploads the files required to be returned to the file server.

The polling script packet comprises one or more polling items and is configured with a login user, a password and parameter information.

The polling sub-system manages the polled apparatus according to layers such as a polling script packet layer, and/or an apparatus layer, and/or an apparatus type layer, and/or an office layer, and/or a task layer, acquires a polling script packet of a corresponding layer and generates a polling report of the corresponding layer.

The above communication network system, the polling method for the communication apparatus, and the polling sub-system have the following advantages: polling script packets can be combined flexibly and can be extended conveniently; the polling sub-system can log in multiple apparatuses simultaneously to perform polling, which improves the polling efficiency; and the polling sub-system can reduce manual interventions, perform polling automatically and generate the polling report automatically, which has comparatively strong usability and can enhance serviceability of the communication apparatus.

### Brief Description of Drawings

FIG. 1 is a schematic diagram of a communication network with a polling sub-system in the example of the present document.
FIG. 2 is a schematic diagram of a specific implementation of the communication network with the polling sub-system in the example of the present document.
FIG. 3 is a schematic diagram of all module functions and processing process of the polling sub-system in the example of the present document.
FIG. 4 is a schematic diagram of management logic of the polling apparatus in the example of the present document.

### Preferred Embodiments of the Invention

In order to make the object, technical scheme and advantages of the present document more clear, the embodiments of the present document will be described in detail in combination with the accompanying drawings below. It should be noted that the examples in the present document and the characteristics in the examples can be optionally combined with each other in the condition of no conflict.

The basic idea of implementing polling in the example of the present document is: designing a polling sub-system for a communication apparatus to automatically log in a polled apparatus, execute the polling, collect polling results, integrate polling data, and output a polling report. The communication apparatus refers to an apparatus which is based on operating systems such as Windows, UNIX or Linux and runs communication service programs on the operating systems, and the communication apparatuses mentioned below all refer to the above apparatuses.

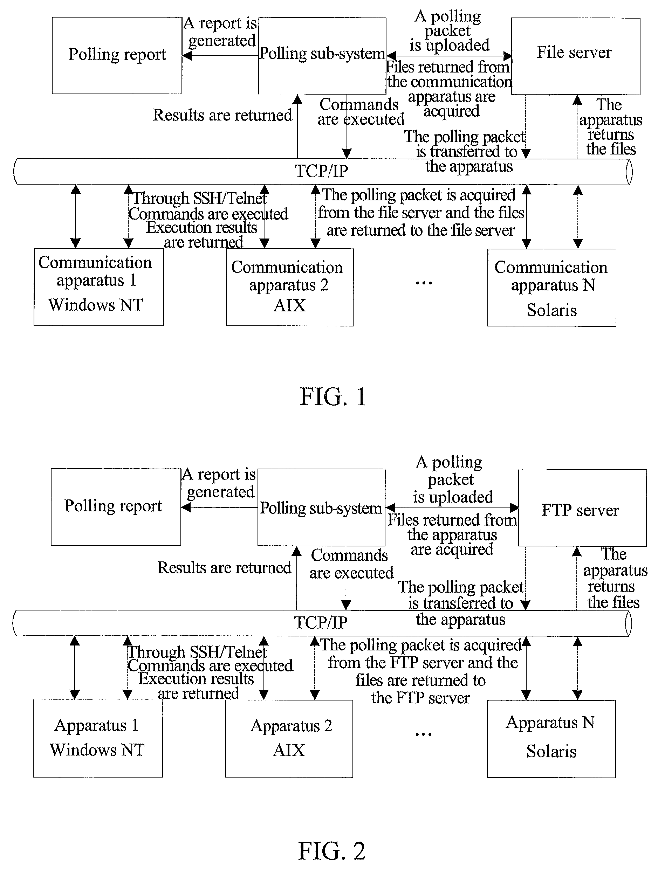

As shown in FIG. 1, a communication network system includes: a polling sub-system, a file server and one or more communication apparatuses, wherein:
the polling sub-system is configured to: upload a polling script packet to the file server, acquire information of a polled apparatus, and remotely log in the polled apparatus according to the information of the polled apparatus; afterwards, the polling sub-system logs in the file server from the polled apparatus, and acquires a corresponding polling script packet to deliver to the polled apparatus;
the polling sub-system executes a polling script in the polling script packet on the polled apparatus, acquires output results of executing the polling script, and uploads files required to be returned to the file server from the polled apparatus; and
the polling sub-system retrieves, from the file server, the file uploaded by the polled apparatus to the file server, integrates the output results of executing the polling script and the file returned by the polled apparatus to the file server, and outputs a polling report.

The polling script packet can be generated by the polling sub-system or by a dedicated polling script packet module.

The polling sub-system can be a software system configured on the computer or a hardware apparatus. The file server can be an FTP server, an FTAM server, or other servers implementing a function of uploading and downloading files. The polling sub-system and the file server are connected through a TCP/IP network, and both the polling sub-system and the file server are interlinked with the polled apparatus through the TCP/IP network.

As shown in FIG. 1, a polling method for a communication apparatus based on the network shown in FIG. 1 includes:
the polling sub-system uploading a polling script packet to the file server;
the polling sub-system remotely logging in the polled apparatus according to the information of the polled apparatus, logging in the file server from the polled apparatus, and acquiring a corresponding polling script packet to deliver to the polled apparatus;
the polling sub-system executing a polling script in the polling script packet on the polled apparatus, acquiring output results of executing the polling script, and uploading files required to be returned to the file server from the polled apparatus; and
the polling sub-system retrieving, from the file server, the file uploaded by the polled apparatus to the file server, integrating the output results of executing the polling script and the file returned by the polled apparatus to the file server, and outputting a polling report.

As shown in FIG. 2, a structure diagram of a communication network in specific implementation is given, wherein, a polling sub-system is installed on the computer and is interlinked with an FTP server and a polled apparatus through a TCP/IP network, the number of polled apparatuses can be N, and a communication apparatus can be a UNIX/Linux system apparatus or a Windows system apparatus.

A polling method for a communication apparatus based on the network system shown in FIG. 2 includes the following steps.

In step a, the polling sub-system uploads a polling script packet to the FTP server, the polling script packet refers to a sum of a script file, an xml file saving script information, and a directory of saving these files; the script can be a shell script, a bat script or a vbs script.

In step b, the polling sub-system acquires information of the polled apparatus from a configuration interface; the information of the polled apparatus includes but is not limited to: information including an IP address of the polled apparatus, a login username and password, a database username and password, and a login way and so on, and the configuration interface refers to a program interface which can add, delete and configure attributes of the polled apparatus.

In step c, the polling sub-system logs in the polled apparatus through an SSH/Telnet protocol according to the configured information of the polled apparatus.

In step d, the polling sub-system executes an FTP operation in a software (e.g. shell) environment or a command (cmd) environment where a user command line use interface is provided by the polled apparatus, and acquires a corresponding polling script packet from the FTP server.

The step of acquiring the corresponding polling script packet from the FTP server is initiated with an identity of the polled apparatus after the polling sub-system logs in the polled apparatus through the SSH/Telnet, and the acquired polling script packet is saved on the polled apparatus; and the polling sub-system determines which kind of polling script packets is acquired according to user configurations.

In step e, the polling sub-system executes the polling script in the polling script packet in the shell environment or cmd environment on the polled apparatus.

In the process of executing the polling script, the polling sub-system is required to determine which polling scripts is to be executed and an order of executing the polling scripts according to the configured polling items; and the polling sub-system is also required to introduce the configured parameters into the scripts which are configured with the parameters in the execution.

In step f, the polling sub-system acquires output results of executing the polling script on the polled apparatus; the step of acquiring the result of executing the polling refers to: the polling sub-system receiving standard output character streams of executing the script on the polled apparatus through an SSH/Telnet interlinkage.

In step g, the polling sub-system executes commands in the shell environment or cmd environment on the polled apparatus, and uploads files required to be returned to the FTP server; and the files uploaded to the FTP server include files directionally output by the polling script and other files on the polled apparatus acquired by the polling sub-system according to the need of user configurations.

In step h, the polling sub-system obtains the files uploaded by the polled apparatus from the FTP server.

In step i, the polling sub-system integrates the output results of the polling script and the files returned by the polled apparatus, and outputs a polling report.

A format of the outputted polling report can be a spreadsheet (e.g., xls) format and also can be a webpage (e.g., html) format, contents of the report include: a polling item name, a polling method, an inspection standard, a polling result and a processing suggestion, and these contents can be displayed in a text mode and also can be connected to corresponding text files or html files through an interlinkage method.

The polling sub-system used for polling the communication apparatuses includes: a polling script packet module, a polling configuration management module, a file transfer protocol module, a remote control protocol module, a polling report output module and an overall logic scheduling module, wherein:
the polling script packet module is configured to: save a polling script packet;
the polling configuration management module is configured to: save the configured information of a polled apparatus;
the file transfer protocol module is configured to: implement an interlinkage between the polling sub-system and a file server, upload the polling script packet to the file server, and acquire, from the file server, files uploaded by the polled apparatus;
the remote control protocol module is configured to: implement an interlinkage between the polling sub-system and the polled apparatus, log in the polled apparatus according to the information of the polled apparatus, execute a polling script, and receive the returned polling result information;
the polling report output module is configured to: integrate the result returned by the remote control protocol module and the files acquired by the file transfer protocol module from the file server in a polling process, and output a polling report; and
the overall logic scheduling module is configured to: implement communication and scheduling among the above modules, and coordinate the processing of all the modules:
   acquiring the information of the polled apparatus and the corresponding polling script packet, and uploading the information of the polled apparatus and the corresponding polling script packet to the file server through the file transfer protocol module; logging in the polled apparatus through the remote control protocol module, and after downloading polling script packet from the file server and executing the polling script, receiving a returned polling result, and uploading a polling file to the file server; controlling the polling report output module, integrating the result returned by the remote control protocol module and the files acquired by the file transfer protocol module from the file server, and outputting the polling report.

The information of the polled apparatus includes but is not limited to one of the following information or any combination thereof: an IP address of the polled apparatus, a login username and password, a database username and password, and a login way.

The polling sub-system includes: a log module, a periodical task drive module and an interface display interaction module;
the interface display interaction module is configured to: show a polling interface, display a polled apparatus which has been added, display polling script packets configured under the apparatus, display an IP address of the apparatus, display an apparatus type of the apparatus, and display an office to which the apparatus belongs; and/or display polling control and process information of one polling script packet, one apparatus, one apparatus type, one office or all apparatuses; and/or configure an address of the file server; and/or display the generated polling report after the polling is finished;
the log module is configured to: implement user outputs and manage polling logs; and the periodical task drive module is configured to: implement a periodical polling function, save a polling task and trigger the polling task.

The polling script packet includes: polling script files, the polling script files include but are not limited to one of the following information or any combination thereof: a polling script, a purpose of each script, a polling method, an inspection standard, a processing suggestion and script parameter information.
the polling script packet module saves a polling script packet of a corresponding layer according to layers such as a polling script packet layer, and/or an apparatus layer, and/or an apparatus type layer, and/or an office layer, and/or a task layer;
the overall logic scheduling module calls the polling script packet layer required in executing the polling according to layers such as a polling script packet layer, and/or an apparatus layer, and/or an apparatus type layer, and/or an office layer, and/or a task layer; and
the polling report output module generates a polling report of the corresponding layer according to layers such as a polling script packet layer, and/or an apparatus layer, and/or an apparatus type layer, and/or an office layer, and/or a task layer.

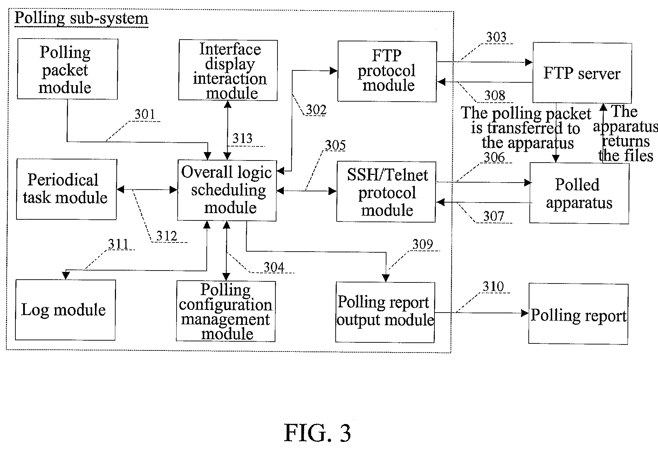

As shown in FIG. 3, a schematic diagram of module structure of a polling sub-system and processing processes of all module functions implementing the polling in the example of the present document is given. In combination with the specific network application scenario shown in FIG. 2, the polling sub-system can include: a polling script packet module, an overall logic scheduling module, an FTP protocol module (i.e. a file transfer protocol module), a polling configuration management module, an SSH/Telnet protocol module (i.e. a remote control protocol module), a polling report output module, a log module, a periodical task drive module and an interface display interaction module, wherein:
the polling script packet module is configured to: generate and save a polling script packet, the polling script packet is a set of polling scripts, the polling scripts can be divided into polling script packets according to different rules and they are normally divided into different polling script packets according to polling objects and polling functions, each polling script packet contains an xml file, and the xml file records information such as polling scripts contained in the current polling script packet, a purposes of each script, a polling method, an inspection standard, a processing suggestion and script parameters and so on;
the interface display interaction module is configured to: show a polling interface, display a polled apparatus which has been added, display polling script packets configured under the apparatus, display an IP address of the apparatus, display an apparatus type to which the apparatus belongs, and display an office to which the apparatus belongs; preferably, a user can start or stop polling of one polling script packet, one apparatus, one apparatus type, one office or all apparatuses through an interface operation, and display information such as completion schedule, start time, end time and total consumed time of each polling script packet and polling results of all polling items in real time; preferably, the user can configure an address of the above FTP server on the interface, and the user can generate a polling report after the polling is finished;
the FTP protocol module is configured to: transfer files between the polling sub-system and the FTP server; preferably, the FTP protocol module is configured to upload the polling script packet to the FTP server and acquire, from the FTP server, files uploaded by the polled apparatus;
the SSH/Telnet protocol module is configured to: implement an interlinkage between the polling sub-system and the polled apparatus; preferably, the polling sub-system logs in the polled apparatus through the SSH/Telnet protocol module, executes a polling script, and receives the returned information;
the polling configuration management module is configured to: save the configured information of the polled apparatus, which includes office information, apparatus type information, polling script packet information of the apparatus, user name and password information required by all polling script packets and so on;
the log module is configured to: implement user outputs and manage polling logs; preferably, the logs of all the polling script packets are independent respectively; preferably, concurrent management is performed when multiple polling script packets are executed simultaneously;
the polling report output module is configured to: integrate returned results of the polling and output a polling report, a form of the output report can be an xls format or an html format;
the periodical task drive module is configured to: implement a periodical polling function; preferably, the periodical task drive module is configured to save a polling task and trigger the polling task;
the overall logic scheduling module is configured to: implement communication and scheduling among the above modules; preferably, the overall logic scheduling module is configured to: manage a thread pool and schedule threads to make the total number of threads keep within a range which can be accepted by a computer system, and coordinate the processing of all the modules.

Besides the processing processes of the above modules, the polling sub-system also include: a management logic of the polled apparatus and an organization logic of the polling report, which manages the polled apparatus and generates the report according to layers such as a polling script packet layer, and/or an apparatus layer, and/or an apparatus type layer, and/or an office layer, and/or a task layer.

As shown in FIG. 3, in the processing process from the polling sub-system polling the apparatus to generating the polling report, a working flow of all the modules includes the following steps.

In step 301, the overall logic scheduling module reads the polling script packet of the polling sub-system. The step of reading the polling script packet refers to acquiring information of all sub-packets in the polling script packet, which includes parsing the xml file in each polling script packet and acquiring a filename list of the polling scripts.

In step 302, the overall logic scheduling module establishes an FTP connection between the overall logic scheduling module and the FTP server through the FTP protocol module, which is used to upload the polling script packet of the polling sub-system to the FTP server through the FTP connection; after executing the polling script packet for the polled apparatus, the overall logic scheduling module also acquires, from the FTP server, the files returned by the polled apparatus through the FTP protocol module.

In step 303, the FTP protocol module uploads the polling script packet to the FTP server through an FTP, and this requires that FTP server accounts configured by the polling sub-system need to be endowed with writing permissions.

In step 304, the overall logic scheduling module reads the information of the polled apparatus from the polling configuration management module, the read information includes: an apparatus name, an apparatus IP, a login way and polling script packet information subordinate to the apparatus, wherein, the polling script packet information includes: a user name and password of executing the polling script packet and parameters of all the polling scripts.

In the step 304, it also includes that the overall logic scheduling module saves and manages the updated apparatus information through the polling configuration management module.

In step 305, the overall logic scheduling module calls the SSH/Telnet protocol module to log in the polled apparatus, sends commands to the polled apparatus through the SSH/Telnet protocol module, and receives character streams returned by the polled apparatus.

In step 306, the SSH/Telnet protocol module establishes a connection with the polled apparatus, the polling sub-system sends the commands through the SSH/Telnet and executes the commands on the polled apparatus, and the step of sending and executing the commands includes:
sending an FTP command, which is used for an initialization of the polled apparatus to acquire the corresponding polling script packet from the FTP server;
sending an execution command, which is used for executing the polling script in the shell environment or cmd environment of the polled apparatus; and
sending an uploading command, which is used for transferring the files required to be uploaded on the polled apparatus to the FTP server by FTP.

In step 307, the SSH/Telnet protocol module receives the character streams returned by the polled apparatus, furthermore, these character streams will be transferred to the overall logic scheduling module to be processed, and these character streams are the results of executing the polling script.

In step 308, the FTP protocol module retrieves the files uploaded by the polled apparatus to the FTP server through the connection between the FTP protocol module and the FTP server, furthermore, these files will be processed by the overall logic scheduling module.

In step 309, after the polling is finished, in a situation that the user requires to genrate the polling report, the overall logic scheduling module calls the polling report output module, integrates the polling results and generates the polling report, wherein, the polling results includes the return of polling script character types and the return of file types.

In step 310, the polling report output module outputs the polling report to a directory specified by the user, a format of the report can be an xls format and also can be an html format.

In step 311, the overall logic scheduling module calls the log module to output and manage logs, and this process starts from enabling the polling sub-system and ends with shutting down the polling sub-system.

In step 312, an interaction between the periodical task drive module and the overall logic scheduling module is performed, the periodical task drive module detects whether to start the polling automatically, if yes, performs coordinated processing through the overall logic scheduling module, and completes the whole polling process.

In step 313, an interaction between the interface display interaction module and the overall logic scheduling module is performed, furthermore, the user configures the polling through the interface display interaction module, starts the polling, and generates the polling report, and the overall logic scheduling module responds to these demands and call the other module to perform the execution; and the interface display interaction module acquires a real-time state of the polling from the overall logic scheduling module and displays the real-time state on the interface.

Wherein, the flow of the polling sub-system applying each module to perform polling processing is elaborated in the above steps, and corresponding to the functions and mutual relationships of all the modules, in the polling sub-system, multiple polled apparatuses can be added, but generally the communication apparatuses are not isolated apparatuses, a logical relationship thereof exists among the communication apparatuses, and a user needs to be able to configure the polling conveniently when using the polling sub-system and also needs to be able to obtain the polling report generated ultimately; polling tasks required to be set are polled periodically, and it is also required to save the polling information saved by the configurations in formats; and a method is adopted to manage the logical relationship of the communication apparatuses in the example of the present document.

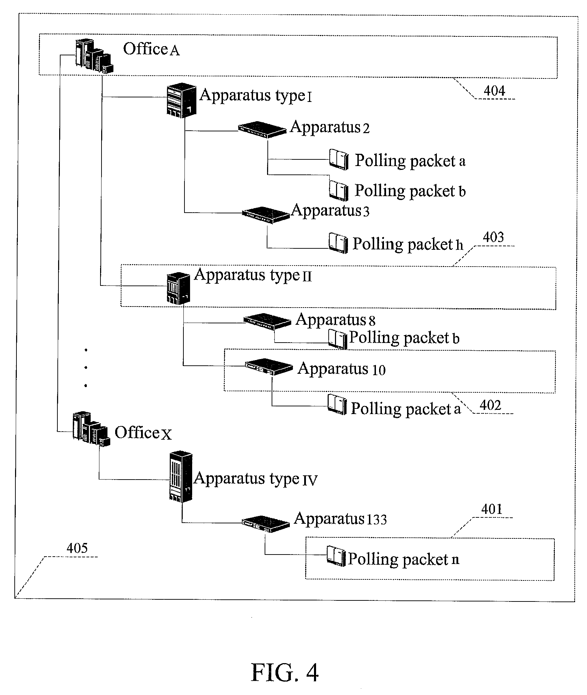

As shown in FIG. 4, a schematic diagram of management logic of the polling apparatus in the example of the present document is given. The management on the polled apparatus is divided into 5 logic layers.
Layer 401: Polling script packet layer

The polling script packet layer is a basic element of the polling logic management, each polling script packet contains a plurality of polling items of a certain aspect of function, and one or more polling script packets can be configured on each polled apparatus; the polling script packet information such as login users, passwords and parameters and so on can be configured in all the polling script packets; and each polling script packet can be executed independently and the report is output.
Layer 402: Apparatus layer

The communication apparatus is a polled object of the polling sub-system, attributes of the management apparatus of this layer include: an apparatus name, an apparatus IP and polling script packets configured under the apparatus;
if the polling with respect to a certain apparatus is started, pollings with respect to all polling script packets subordinate to the apparatus are started, and these pollings are concurrent;
if it is required to generate a polling report of a certain apparatus, the output polling report includes polling reports of all polling script packets subordinate to the apparatus.
Layer 403: Apparatus type layer

The communication apparatuses can be divided into different types according to application attributes thereof, such as a service processor, an operation maintenance server, an accounting server, and a Service Control Point (SCP) and so on, and each apparatus type may have a plurality of communication apparatuses. Through the apparatus type layer, all apparatuses subordinate to a certain type can be managed, and all the subordinate polling script packets can be managed;
if the polling with respect to a certain apparatus type is started, pollings with respect to all apparatuses subordinate to the apparatus type are started, and these pollings are concurrent;
if it is required to generate a polling report of a certain apparatus type, the output polling report includes polling reports of all apparatuses subordinate to the apparatus type.
Layer 404: Office layer

A system or several systems of the communication apparatuses constitute an office, a plurality of different apparatus types are subordinate to one office, all the subordinate apparatus types can be managed through the office layer, and all the subordinate apparatuses and polling script packets can be further managed.
if the polling with respect to a certain office is started, pollings with respect to all apparatuses subordinate to the office are started, and these pollings are concurrent;
if it is required to generate a polling report of a certain office, the output polling report includes polling reports of all apparatuses subordinate to the office.
Layer 405: Task layer

The task layer contains all the configured offices and all subordinate configurations of the offices, and all the subordinate polling configurations can be managed through the task.
if the polling with respect to a certain task is started, pollings with respect to all apparatuses subordinate to the task are started, and these pollings are concurrent;
if it is required to generate a polling report of a certain task, the output polling report includes polling reports of all apparatuses subordinate to the task.

The task can be saved and also can be set as a periodical task, when the periodical time is expired, pollings with respect to all offices in the task and subordinate contents thereof are started, and a report is generated.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or more integrated circuits. Correspondingly, each module/unit in the above examples can be implemented in a form of hardware, and also can be implemented in a form of software function module. The present document is not limited to any combination of hardware and software in a specific form.

The above description is only the preferred examples of the present document, which is not used to limit the present document. The present document can have various modifications and changes for the skilled in the art.

### Industrial Applicability

The above embodiment has the following advantages: polling script packets can be combined flexibly and can be extended conveniently; the polling sub-system can log in multiple apparatuses simultaneously to perform polling, which improves the polling efficiency; and the polling sub-system can reduce manual interventions, perform polling automatically and generate the polling report automatically, which has comparatively strong usability and can enhance serviceability of the communication apparatus.

## Claims

1. A communication network system, comprising: a polling sub-system, a file server and one or more communication apparatuses, wherein, the polling sub-system is configured to:
upload a polling script packet to the file server, acquire information of a polled apparatus, and remotely and automatically log in the polled apparatus according to the information of the polled apparatus; log in the file server from the polled apparatus, and acquire a corresponding polling script packet to deliver to the polled apparatus;
execute a polling script in the polling script packet on the polled apparatus, acquire output results of executing the polling script, and upload files required to be returned to the file server from the polled apparatus; and
retrieve, from the file server, the files uploaded by the polled apparatus to the file server, integrate the output results of executing the polling script and the files returned by the polled apparatus to the file server, and output a polling report.

2. The communication network system according to claim 1, wherein, the information of the polled apparatus comprises but is not limited to one of the following information or any combination thereof:
an Internet Protocol (IP) address of the polled apparatus, a login username and password, a database username and password, and a login way.

3. The communication network system according to claim 1, wherein,
the file server is a File Transfer Protocol (FTP) server, or a File Transfer Access and Management (FTAM) server, or a server implementing a function of uploading and downloading files;
the communication apparatus refers to an apparatus which is based on operating systems such as Windows, UNIX or Linux and runs communication service programs on the operating systems.

4. The communication network system according to claim 1, wherein,
the polling sub-system is configured to: log in the polled apparatus by a way of Secure Shell (SSH)/Telnet, and in a shell environment or a command (cmd) environment, execute the polling script packet, log in the file server, and acquire required polling script packet and upload the files required to be returned to the file server.

5. The communication network system according to claim 1, wherein,
the polling script packet comprises one or more polling items and is configured with a login user, a password and parameter information.

6. The communication network system according to claim 1, wherein,
the polling sub-system is configured to: manage the polled apparatus according to layers such as a polling script packet layer, and/or an apparatus layer, and/or an apparatus type layer, and/or an office layer, and/or a task layer, acquire a polling script packet of a corresponding layer and generate a polling report of the corresponding layer.

7. A polling sub-system used for polling communication apparatuses, comprising: a polling script packet module, a polling configuration management module, a file transfer protocol module, a remote control protocol module, a polling report output module and an overall logic scheduling module, wherein:
the polling script packet module is configured to: save a polling script packet;
the polling configuration management module is configured to: save configured information of a polled apparatus;
the file transfer protocol module is configured to: implement an interlinkage between the polling sub-system and a file server, upload the polling script packet to the file server, and acquire, from the file server, files uploaded by the polled apparatus;
the remote control protocol module is configured to: implement an interlinkage between the polling sub-system and the polled apparatus, log in the polled apparatus according to the information of the polled apparatus, execute a polling script, and receive the returned polling result information;
the polling report output module is configured to: integrate the returned results of the remote control protocol module and the files acquired by the file transfer protocol module from the file server in a polling process, and output a polling report; and
the overall logic scheduling module is configured to: implement communication and scheduling among the polling script packet module, the polling configuration management module, the file transfer protocol module, the remote control protocol module and the polling report output module, and coordinate each module to perform the following processing:
acquiring the information of the polled apparatus and the corresponding polling script packet, and uploading the information of the polled apparatus and the corresponding polling script packet to the file server through the file transfer protocol module; logging in the polled apparatus through the remote control protocol module, and after downloading polling script packet from the file server and executing the polling script packet, receiving the returned polling results, and uploading polling files to the file server; controlling the polling report output module, integrating the returned results of the remote control protocol module and the files acquired by the file transfer protocol module from the file server, and outputting the polling report.

8. The polling sub-system according to claim 7, wherein, the information of the polled apparatus comprises but is not limited to one of the following information or any combination thereof: an Internet Protocol (IP) address of the polled apparatus, a login username and password, a database username and password, and a login way.

9. The polling sub-system according to claim 7, further comprising: a log module, a periodical task drive module and an interface display interaction module;
the interface display interaction module is configured to: show a polling interface, display a polled apparatus which has been added, display polling script packets configured under the apparatus, display an IP address of the apparatus, display an apparatus type of the apparatus, and display an office to which the apparatus belongs; and/or display polling control and process information of one polling script packet, one apparatus, one apparatus type, one office or all apparatuses; and/or configure an address of the file server; and/or display a generated polling report after the polling is finished;
the log module is configured to: implement user outputs and manage polling logs; and the periodical task drive module is configured to: implement a periodical polling function, save a polling task and trigger the polling task.

10. The polling sub-system according to claim 7, wherein, the polling script packet comprises: polling script files, the polling script files comprise but are not limited to one of the following information or any combination thereof: a polling script, a purpose of each script, a polling method, an inspection standard, a processing suggestion and script parameter information.

11. The polling sub-system according to claim 7, wherein,
the polling script packet module is configured to: save a polling script packet of a corresponding layer according to layers such as a polling script packet layer, and/or an apparatus layer, and/or an apparatus type layer, and/or an office layer, and/or a task layer;
the overall logic scheduling module is configured to: call the polling script packet layer required in executing the polling according to layers such as a polling script packet layer, and/or an apparatus layer, and/or an apparatus type layer, and/or an office layer, and/or a task layer; and
the polling report output module is configured to: generate a polling report of the corresponding layer according to layers such as a polling script packet layer, and/or an apparatus layer, and/or an apparatus type layer, and/or an office layer, and/or a task layer.

12. A polling method for a communication apparatus, comprising: in a communication system comprising a polling sub-system, a file server and one or more communication apparatuses,
the polling sub-system uploading a polling script packet to the file server, acquiring information of a polled apparatus, and remotely logging in the polled apparatus according to the information of the polled apparatus;
the polling sub-system logging in the file server from the polled apparatus, and acquiring a corresponding polling script packet to deliver to the polled apparatus;
the polling sub-system executing a polling script in the polling script packet on the polled apparatus, acquiring output results of executing the polling script, and uploading files required to be returned to the file server from the polled apparatus; and
the polling sub-system retrieving, from the file server, the files uploaded by the polled apparatus to the file server, integrating the output results of executing the polling script and the files returned by the polled apparatus to the file server, and outputting a polling report.

13. The polling method according to claim 12, wherein, the information of the polled apparatus comprises but is not limited to one of the following information or any combination thereof:
an Internet Protocol (IP) address of the polled apparatus, a login username and password, a database username and password, and a login way.

14. The polling method according to claim 12, wherein,
the file server is a File Transfer Protocol (FTP) server, or a File Transfer Access and Management (FTAM) server, or a server implementing a function of uploading and downloading files;
the communication apparatus refers to an apparatus which is based on operating systems such as Windows, UNIX or Linux and runs communication service programs on the operating systems.

15. The polling method according to claim 12, wherein,
the polling sub-system logs in the polled apparatus by a way of Secure Shell (SSH)/Telnet, and in a shell environment or a command (cmd) environment, executes the polling script packet, logs in the file server, and acquires required polling script packet and uploads the files required to be returned to the file server.

16. The polling method according to claim 12, wherein,
the polling script packet comprises one or more polling items and is configured with a login user, a password and parameter information.

17. The polling method according to claim 12, wherein,
the polling sub-system manages the polled apparatus according to layers such as a polling script packet layer, and/or an apparatus layer, and/or an apparatus type layer, and/or an office layer, and/or a task layer, acquires a polling script packet of a corresponding layer and generates a polling report of the corresponding layer.

## Patentansprüche

1. Kommunikations-Netzwerk-System, welches aufweist:
ein Abfragesubsystem, einen Datei-Server und einen oder mehrere Kommunikationsapparate, wobei das Abfragesubsystem konfiguriert ist, um:
- ein Abfrageskript-Paket an den Datei-Server hochzuladen, Informationen eines angewählten Apparates zu erhalten und fernbedient und automatisch den angewählten Apparat entsprechend seiner Informationen einzuloggen; den Datei-Server vom angewählten Apparat aus einzuloggen und ein korrespondierendes Abfrageskript-Paket zu erhalten, um dieses an den angewählten Apparat zu senden;
- ein Abfrageskript im Abfrageskript-Paket auf dem angewählten Apparat auszuführen, Ausgabeergebnisse der Ausführung des Abfrageskripts zu erhalten und Dateien hoch-zuladen, welche von dem angewählten Apparat an den Datei-Server zurückgesendet werden müssen;
- vom Datei-Server die Dateien abzufragen, welche von dem angewählten Apparat zum Datei-Server hochgeladen wurden, die Ausgabeergebnisse der Ausführung des Abfrageskripts und die vom angewählten Apparat an den Datei-Server zurückgesendeten Dateien zu integrieren und einen Abfragebericht auszugeben.

2. Kommunikations-Netzwerk-System gemäß Anspruch 1, wobei die Information des angewählten Apparates eine oder mehrere der folgenden Informationen oder jegliche Kombination davon aufweist:
eine Internet Protokoll (IP) Adresse des angewählten Apparates, einen Login Benutzernamen mit Passwort, einen Datenbank-Benutzernamen mit Passwort und eine Login-Methode.

3. Kommunikations-Netzwerk-System gemäß Anspruch 1, wobei der Datei-Server ein File Transfer Protocol Server (FTP) oder ein File Transfer Access and Management Server (FTAM), oder ein Server ist, welcher die Funktionen Hochladen und Herunterladen von Dateien bereitstellt;
die Kommunikationsvorrichtung bezieht sich auf eine Vorrichtung, welche auf einem Betriebssystem wie Windows, UNIX oder Linux basiert und Kommunikationsdienst-Programme auf dem Betriebssystem ausführt.

4. Kommunikations-Netzwerk-System gemäß Anspruch 1, wobei das Abfragesubsystem konfiguriert ist, um:
den angewählten Apparat unter Verwendung eines der Protokolle Secure Shell (SSH)/Telnet und in einer Shell-Umgebung oder einer Command-Umgebung (cmd) einzuloggen, das Abfrageskript-Paket auszuführen, den Datei-Server einzuloggen und das benötigte Abfrageskript-Paket zu erhalten und die Dateien hochzuladen, welche an den Datei-Server zurückgesendet werden müssen.

5. Kommunikations-Netzwerk-System gemäß Anspruch 1, wobei das Abfrageskript-Paket ein oder mehrere Abfrageelemente aufweist und mit einem Benutzernamen, einem Passwort und Parameterinformationen konfiguriert ist.

6. Kommunikations-Netzwerk-System gemäß Anspruch 1, wobei das Abfragesubsystem konfiguriert ist, um:
den angewählten Apparat gemäß Layer, wie z.B. einem Abfrageskript-Paket-Layer und/oder einem Apparat-Layer und/oder einem Apparattyp-Layer und/oder einem Office-Layer und/oder einem Task-Layer zu verwalten, ein Abfrageskript-Paket eines korrespondierenden Layers zu erhalten und einen Abfragebericht des korrespondierenden Layers zu generieren.

7. Abfragesubsystem zur Anwendung bei Abfrage-Kommunikationsapparaten, welches aufweist:
ein Abfrageskript-Paket-Modul, ein Abfrage-Konfigurationsverwaltungsmodul, ein Dateitransfer-Protokoll-Modul, ein Fernsteuer-Protokoll-Modul, ein Abfragebericht-Ausgabe-Modul und ein Gesamtlogik-Zeitsteuerungsmodul, wobei:
- das Abfrageskript-Paket-Modul konfiguriert ist, um ein Abfrageskript-Paket zu speichern;
- das Steuerungsmodul zur Konfiguration der Abfragen konfiguriert ist, um die Konfigurationsinformationen eines angewählten Apparates zu speichern;
- das Dateitransfer-Protokoll-Modul konfiguriert ist, um eine Verbindung zwischen dem Abfragesubsystem und einem Datei-Server herzustellen, das Abfrageskript-Paket zum Datei-Server hochzuladen und vom Datei-Server Daten zu erhalten, welche vom angewählten Apparat hochgeladen wurden;
- das Fernsteuer-Protokoll-Modul konfiguriert ist, um eine Verbindung zwischen dem Abfragesubsystem und dem angewählten Apparat herzustellen, den angewählten Apparat gemäß der Informationen des angewählten Apparates einzuloggen, ein Abfrageskript auszuführen und die zurückgegebene Abfrageergebnisinformation zu empfangen;
- das Abfragebericht-Ausgabe-Modul konfiguriert ist, um die zurückgesendeten Ergebnisse des Fernsteuer-Protokoll-Moduls und die Dateien, die das Dateitransfer-Protokoll-Modul während eines Abfragevorganges vom Datei-Server erhalten hat, zu integrieren und einen Abfragebericht auszugeben; und
- das Gesamtlogik-Zeitsteuerungsmodul konfiguriert ist, um Kommunikation und Zeitsteuerung zwischen dem Abfrageskript-Paket-Modul, dem Abfrage-Konfigurationsverwaltungsmodul, dem Dateitransfer-Protokoll-Modul, dem Fernsteuer-Protokoll-Modul und dem Abfragebericht-Ausgabe-Modul herzustellen und jedes Modul so zu koordinieren, dass folgender Ablauf durchgeführt wird:
Erhalt der Information des angewählten Apparates und des korrespondierenden Abfrageskript-Pakets und Hochladen der Information des angewählten Apparates und dem korrespondierenden Abfrageskript-Paket an den Datei-Server durch das Dateitransfer-Protokoll-Modul; Einloggen des angewählten Apparates durch das Fernsteuer-Protokoll-Modul und, nach dem Herunterladen des Abfrageskript-Pakets vom Datei-Server und der Ausführung des Abfrageskript-Pakets, Empfang der zurückgesendeten Abfrageergebnisse und Hochladen von Abfragedateien auf den Datei-Server; Steuerung des Abfragebericht-Ausgabe-Moduls, Integrieren der vom Fernsteuer-Protokoll-Modul zurückgesendeten Ergebnisse und der Dateien, welche das Dateitransfer-Protokoll-Modul vom Datei-Server erhalten hat, und Ausgeben des Abfrageberichtes.

8. Abfragesubsystem gemäß Anspruch 7, wobei die Information des angewählten Apparates eine oder mehrere der folgenden Informationen oder jegliche Kombination davon aufweist:
eine Internet Protokoll (IP) Adresse des angewählten Apparates, einen Login- BenutzerNamen mit Passwort, einen Datenbank-Benutzernamen mit Passwort und eine Login-Methode.

9. Abfragesubsystem gemäß Anspruch 7, welches zudem aufweist:
ein Log-Modul, ein periodisches Task-Drive-Modul und ein Schnittstellen-Interaktions-Modul;
das Schnittstellen-Interaktions-Modul konfiguriert ist, um:
ein Abfrage-Interface zu zeigen, einen hinzugefügten angewählten Apparat anzuzeigen, Abfrageskript-Pakete anzuzeigen, welche gemäß dem Apparat konfiguriert wurden, eine IP-Adresse des Apparates anzuzeigen, den Apparatetyp des Apparates anzuzeigen und ein Office anzuzeigen, zu dem der Apparat gehört; und / oder die Abfragesteuerung und Ablaufinformation eines Abfrageskript-Paketes, eines Apparates, eines Apparattyps, eines Büros oder aller Apparate anzuzeigen; und / oder eine Adresse des Datei-Servers zu konfigurieren; und / oder einen generierten Abfragebericht anzuzeigen, nachdem die Abfrage beendet ist;
das Protokoll-Modul ist konfiguriert, um Benutzerausgaben auszuführen und Abfrageprotokolle zu implementieren; und
das periodische Task-Drive-Modul ist gestaltet, um eine periodische Abfragefunktion zu implementieren, einen Abfrage-Task zu speichern und einen Abfrage-Task zu triggern.

10. Abfragesubsystem gemäß Anspruch 7, wobei das Abfrageskript-Paket aufweist:
Abfrageskript-Dateien, die eine oder mehrere der folgenden Informationen oder jegliche Kombination davon aufweisen:
ein Abfrageskript, einen Verwendungszweck eines jeden Skripts, eine Abfragemethode,
einen Überwachungsstandard, einen Vorschlag zum Ablauf und Skript-Parameter-Informationen.

11. Abfragesubsystem gemäß Anspruch 7, wobei
das Abfrageskript-Paket-Modul konfiguriert ist, um ein Wahlskript-Paket eines korrespondierenden Layers zu speichern, gemäß Layern, wie z.B. einem Abfrageskript-Paket-Layer und/oder einem Apparat-Layer und/oder einem Apparattyp-Layer und/oder einem Office-Layer und/oder einem Task-Layer;
das Gesamtlogik-Zeitsteuerungsmodul konfiguriert ist, um den bei Ausführung der Abfrage benötigten Abfrageskript-Paket-Layer aufzurufen, gemäß Layern, wie z.B. einem Abfrageskript-Paket-Layer und/oder einem Apparat-Layer und/oder einem Apparattyp-Layer und/oder einem Office-Layer und/oder einem Task-Layer; und
das Abfragebericht-Ausgabe-Modul konfiguriert ist, um einen Abfragebericht eines korrespondierenden Layers zu generieren, gemäß Layern, wie z.B. einem Abfrageskript-Paket-Layer und/oder einem Apparat-Layer und/oder einem Apparattyp-Layer und/oder einem Office-Layer und/oder einem Task-Layer;

12. Abfragemethode für einen Kommunikationsapparat, welcher aufweist:
ein Kommunikationssystem, welches ein Abfragesubsystem, einen Datei-Server und einen oder mehrere Kommunikationsapparate aufweist, wobei
das Abfragesubsystem, ein Abfrageskript-Paket zum Datei-Server hochlädt, Informationen von einem angewählten Apparat erhält und ferngesteuert den angewählten Apparat gemäß der Informationen des angewählten Apparates einloggt;
das Abfragesubsystem, den Datei-Server von dem angewählten Apparat aus einloggt und ein korrespondierendes Abfrageskript-Paket erhält, um dieses an den angewählten Apparat zu senden;
das Abfragesubsystem, ein Abfrageskript im Abfrageskript-Paket auf dem angewählten Apparat ausführt, Ausgabeergebnisse durch die Ausführung des Abfrageskripts erhält und Dateien hochlädt, welche von dem angewählten Apparat an den Datei-Server zurück gesendetwerden müssen;
das Abfragesubsystem vom Datei-Server die Dateien abfrägt, welche vom angewählten Apparat zum Datei-Server hochgeladen wurden, die Ausgabeergebnisse der Ausführung des Abfrageskripts und die vom angewählten Apparat an den Datei-Server zurück gesendeten Dateien zusammenführt und einen Abfragebericht ausgibt.

13. Abfragemethode gemäß Anspruch 12, wobei die Information des angewählten Apparates eine oder mehrere der folgenden Informationen oder jegliche Kombination davon aufweist:
eine Internet Protokoll (IP) Adresse des angewählten Apparates, einen Login-Benutzernamen mit Passwort, einen Datenbank-Benutzernamen mit Passwort und eine Login-Methode.

14. Abfragemethode gemäß Anspruch 12, wobei der Datei-Server ein File Transfer Protocol Server (FTP) oder ein File Transfer Access and Management Server (FTAM), oder ein Server ist, welcher die Funktionen Hochladen und Herunterladen von Dateien bereitstellt; der Kommunikationsapparat einen Apparat darstellt, welcher auf einem Betriebssystem wie Windows, UNIX oder Linux basiert und auf dem Betriebssystem Kommunikations-dienstprogramme ausführt.

15. Abfragemethode gemäß Anspruch 12, wobei das Abfragesubsystem den angewählten Apparat unter Verwendung eines der Protokolle Secure Shell (SSH) / Telnet einloggt und in einer Shell-Umgebung oder einer Command-Umgebung (cmd) das Abfrageskript-Paket ausführt, sich am Datei-Server einloggt und das benötigte Abfrageskript-Paket erhält und die Dateien, welche an den Datei-Server zurückgesendet werden müssen, hochlädt.

16. Abfragemethode gemäß Anspruch 12, wobei das Abfrageskript-Paket ein oder mehrere Abfrageelemente aufweist und mit einem Benutzernamen, einem Passwort und Parameterinformationen konfiguriert ist.

17. Die Abfragemethode gemäß Anspruch 12, wobei das Abfragesubsystem den angewählten Apparat gemäß Layern, wie z.B. einem Abfrageskript-Paket-Layer und/oder einem Apparat-Layer und/oder einem Apparattyp-Layer und/oder einem Office-Layer und/oder einem Task-Layer verwaltet, ein Wahlskript-Paket eines korrespondierenden Layers erhält und einen Abfragebericht des korrespondierenden Layers generiert.

## Revendications

1. Système de réseau de communication, comprenant : un sous-système d'interrogation, un serveur de fichiers et un ou plusieurs appareils de communication, dans lequel le sous-système d'interrogation est configuré pour :
télécharger un paquet de scripts d'interrogation vers le serveur de fichiers, acquérir des informations d'un appareil interrogé, et se connecter à distance et automatiquement à l'appareil interrogé conformément aux informations de l'appareil interrogé ; se connecter au serveur de fichiers à partir de l'appareil interrogé, et acquérir un paquet de scripts d'interrogation correspondant à délivrer à l'appareil interrogé ;
exécuter un script d'interrogation dans le paquet de scripts d'interrogation sur l'appareil interrogé, acquérir les résultats de sortie d'exécution du script d'interrogation, et télécharger les fichiers devant être renvoyé au serveur de fichiers à partir de l'appareil interrogé ; et
récupérer, dans le serveur de fichiers, les fichiers téléchargés par l'appareil interrogé vers le serveur de fichiers, intégrer les résultats de sortie d'exécution du script d'interrogation et les fichiers renvoyés par l'appareil interrogé au serveur de fichiers, et délivrer un rapport d'interrogation.

2. Système de réseau de communication selon la revendication 1, dans lequel les informations de l'appareil interrogé comprennent, mais sans y être limitées, l'une des informations suivantes ou n'importe quelle combinaison de celles-ci :
une adresse IP (Internet Protocol) de l'appareil interrogé, un nom d'utilisateur et un mot de passe de connexion, un nom d'utilisateur et un mot de passe de base de données et une manière de se connecter.

3. Système de réseau de communication selon la revendication 1, dans lequel
le serveur de fichiers est un serveur FTP (File Transfer Protocol), ou un serveur FTAM (File Transfer Access and Management), ou un serveur effectuant une fonction de téléchargements amont et aval de fichiers ;
l'appareil de communication fait référence à un appareil qui est basé sur des systèmes d'exploitation tels que Windows, UNIX ou Linux et exécute des programmes de service de communication sur les systèmes d'exploitation.

4. Système de réseau de communication selon la revendication 1, dans lequel
le sous-système d'interrogation est configuré pour :
se connecter à l'appareil interrogé au moyen de Secure Shell (SSH)/Telnet, et dans un environnement d'interpréteur de commandes ou un environnement de commandes (cmd), exécuter le paquet de scripts d'interrogation, se connecter au serveur de fichiers, et acquérir un paquet de scripts d'interrogation requis et télécharger les fichiers à renvoyer au serveur de fichiers.

5. Système de réseau de communication selon la revendication 1, dans lequel
le paquet de scripts d'interrogation comprend un ou plusieurs articles d'interrogation et est configuré avec des informations d'utilisateur, de mot de passe et de paramètres de connexion.

6. Système de réseau de communication selon la revendication 1, dans lequel
le sous-système d'interrogation est configuré pour :
gérer l'appareil interrogé conformément à des couches telles qu'une couche de paquet de scripts d'interrogation, et/ou une couche d'appareil, et/ou une couche de type d'appareil, et/ou une couche de bureau, et/ou une couche de tâche, acquérir un paquet de scripts d'interrogation d'une couche correspondante et générer un rapport d'interrogation de la couche correspondante.

7. Sous-système d'interrogation utilisé pour interroger des appareils de communication, comprenant : un module de paquet de scripts d'interrogation, un module de gestion de configuration d'interrogation, un module de protocole de transfert de fichier, un module de protocole de commande à distance, un module de sortie de rapport d'interrogation et un module de planification de logique globale, dans lequel :
le module de paquet de scripts d'interrogation est configuré pour : sauvegarder un paquet de scripts d'interrogation ;
le module de gestion de configuration d'interrogation est configuré pour : sauvegarder les informations configurées d'un appareil interrogé ;
le module de protocole de transfert de fichier est configuré pour : mettre en oeuvre une interconnexion entre le sous-système d'interrogation et un serveur de fichiers, télécharger le paquet de scripts d'interrogation vers le serveur de fichiers, et acquérir, à partir du serveur de fichiers, les fichiers téléchargés par l'appareil interrogé ;
le module de protocole de commande à distance est configuré pour : mettre en oeuvre une interconnexion entre le sous-système d'interrogation et l'appareil interrogé, se connecter à l'appareil interrogé conformément aux informations de l'appareil interrogé, exécuter un script d'interrogation, et recevoir les informations de résultat d'interrogation renvoyées ;
le module de sortie de rapport d'interrogation est configuré pour : intégrer les résultats renvoyés du module de protocole de commande à distance et les fichiers acquis par le module de protocole de transfert de fichier à partir du serveur de fichiers dans un processus d'interrogation, et délivrer un rapport d'interrogation ; et
le module de planification de logique globale est configuré pour : mettre en oeuvre une communication et une planification entre le module de paquet de scripts d'interrogation, le module de gestion de configuration d'interrogation, le module de protocole de transfert de fichier, le module de protocole de commande à distance et le module de sortie de rapport d'interrogation, et coordonner chaque module pour effectuer le traitement suivant :
acquérir les informations de l'appareil interrogé et le paquet de scripts d'interrogation correspondant, et télécharger les informations de l'appareil interrogé et le paquet de scripts d'interrogation correspondant vers le serveur de fichiers par l'intermédiaire du module de protocole de transfert de fichier ; se connecter à l'appareil interrogé par l'intermédiaire du module de protocole de commande à distance, et après le téléchargement du paquet de scripts d'interrogation à partir du serveur de fichiers et l'exécution du paquet de scripts d'interrogation, recevoir les résultats d'interrogation renvoyés, et télécharger les fichiers d'interrogation vers le serveur de fichiers ; commander le module de sortie de rapport d'interrogation, intégrer les résultats renvoyés du module de protocole de commande à distance et les fichiers acquis par le module de protocole de transfert de fichier à partir du serveur de fichiers, et délivrer le rapport d'interrogation.

8. Sous-système d'interrogation selon la revendication 7, dans lequel les informations de l'appareil interrogé comprennent, mais sans y être limitées, l'une des informations suivantes ou n'importe quelle combinaison de celles-ci : une adresse IP (Internet Protocol) de l'appareil interrogé, un nom d'utilisateur et un mot de passe de connexion, un nom d'utilisateur et un mot de passe de base de données, et une manière de se connecter.

9. Sous-système d'interrogation selon la revendication 7, comprenant en outre : un module de connexions, un module de commande de tâche périodique et un module d'interaction d'affichage d'interface ;
le module d'interaction d'affichage d'interface est configuré pour : présenter une interface d'interrogation, afficher un appareil interrogé qui a été ajouté, afficher des paquets de script d'interrogation configurés sous l'appareil, afficher une adresse IP de l'appareil, afficher un type d'appareil de l'appareil, et afficher un bureau auquel l'appareil appartient ; et/ou afficher des informations de commande et de processus d'interrogation d'un paquet de scripts d'interrogation, un appareil, un type d'appareil, un bureau ou tous les appareils ; et/ou configurer une adresse du serveur de fichiers ; et/ou afficher un rapport d'interrogation généré à la fin de l'interrogation ;
le module de connexions est configuré pour : mettre en oeuvre les sorties d'utilisateur et gérer les connexions d'interrogation ; et
le module de commande de tâche périodique est configuré pour : mettre en oeuvre une fonction d'interrogation périodique, sauvegarder une tâche d'interrogation et déclencher la tâche d'interrogation.

10. Sous-système d'interrogation selon la revendication 7, dans lequel le paquet de scripts d'interrogation comprend : des fichiers de script d'interrogation, les fichiers de script d'interrogation comprennent, mais sans y être limités, l'une des informations suivantes ou n'importe quelle combinaison de celles-ci : un script d'interrogation, un objet de chaque script, un procédé d'interrogation, une norme d'inspection, une suggestion de traitement et des informations de paramètres de script.

11. Sous-système d'interrogation selon la revendication 7, dans lequel
le module de paquet de scripts d'interrogation est configuré pour : sauvegarder un paquet de scripts d'interrogation d'une couche correspondante conformément à des couches telles qu'une couche de paquet de scripts d'interrogation, et/ou une couche d'appareil, et/ou une couche de type d'appareil, et/ou une couche de bureau, et/ou une couche de tâche ;
le module de planification de logique globale est configuré pour : appeler la couche de paquet de scripts d'interrogation nécessaire pour l'exécution de l'interrogation conformément à des couches telles qu'une couche de paquet de scripts d'interrogation, et/ou une couche d'appareil, et/ou une couche de type d'appareil, et/ou une couche de bureau, et/ou une couche de tâche ; et
le module de sortie de rapport d'interrogation est configuré pour : générer un rapport d'interrogation de la couche correspondante conformément à des couches telles qu'une couche de paquet de scripts d'interrogation, et/ou une couche d'appareil, et/ou une couche de type d'appareil, et/ou une couche de bureau, et/ou une couche de tâche.

12. Procédé d'interrogation pour un appareil de communication, comprenant : dans un système de communication comprenant un sous-système d'interrogation, un serveur de fichiers et un ou plusieurs appareils de communication,
le sous-système d'interrogation télécharge un paquet de scripts d'interrogation vers le serveur de fichiers, acquiert les informations d'un appareil interrogé, et se connecte à distance à l'appareil interrogé conformément aux informations de l'appareil interrogé ;
le sous-système d'interrogation se connecte au serveur de fichiers à partir de l'appareil interrogé, et acquiert un paquet de scripts d'interrogation correspondant à délivrer à l'appareil interrogé ;
le sous-système d'interrogation exécute un script d'interrogation dans le paquet de scripts d'interrogation sur l'appareil interrogé, acquiert les résultats de sortie d'exécution du script d'interrogation, et télécharge les fichiers devant être renvoyés au serveur de fichiers à partir de l'appareil interrogé ; et
le sous-système d'interrogation récupère, à partir du serveur de fichiers, les fichiers téléchargés par l'appareil interrogé vers le serveur de fichiers, intègre les résultats de sortie d'exécution du script d'interrogation et les fichiers renvoyés par l'appareil interrogé au serveur de fichiers, et délivre un rapport d'interrogation.

13. Procédé d'interrogation selon la revendication 12, dans lequel les informations de l'appareil interrogé comprennent, mais sans y être limitées, l'une des informations suivantes ou n'importe quelle combinaison de celles-ci :
une adresse IP (Internet Protocol) de l'appareil interrogé, un nom d'utilisateur et un mot de passe de connexion, un nom d'utilisateur et un mot de passe de base de données, et une manière de se connecter.

14. Procédé d'interrogation selon la revendication 12, dans lequel
le serveur de fichiers est un serveur FTP (File Transfer Protocol), ou un serveur FTAM (File Transfer Access and Management), ou un serveur effectuant une fonction de téléchargements amont et aval de fichiers ;
l'appareil de communication fait référence à un appareil qui est basé sur des systèmes d'exploitation tels que Windows, UNIX ou Linux et exécute des programmes de service de communication sur les systèmes d'exploitation.

15. Procédé d'interrogation selon la revendication 12, dans lequel
le sous-système d'interrogation se connecte à l'appareil interrogé au moyen de Secure Shell (SSH)/ Telnet, et dans un environnement d'interpréteur de commandes ou un environnement de commande (cmd), exécute le paquet de scripts d'interrogation, se connecte au serveur de fichiers, et acquiert un paquet de scripts d'interrogation requis et télécharge les fichiers devant être renvoyés au serveur de fichiers.

16. Procédé d'interrogation selon la revendication 12, dans lequel le paquet de scripts d'interrogation comprend un ou plusieurs articles d'interrogation et est configuré avec des informations d'utilisateur, de mot de passe et de paramètres de connexion.

17. Procédé d'interrogation selon la revendication 12, dans lequel
le sous-système d'interrogation gère l'appareil interrogé conformément à des couches telles qu'une couche de paquet de scripts d'interrogation, et/ou une couche d'appareil, et/ou une couche de type d'appareil, et/ou une couche de bureau, et/ou une couche de tâche, acquiert un paquet de scripts d'interrogation d'une couche correspondante et génère un rapport d'interrogation de la couche correspondante.
